# FASCICULE DE BREVET EUROPEEN

(11) **EP 3 296 167 B1**
(45) Date de publication et mention de la délivrance du brevet: **01.04.2020**
(21) Numéro de dépôt: 17184082.0
(22) Date de dépôt: 31.07.2017
(51) Int. Cl.: B60S 1/38, B60S 1/52

(54) **EMBOUT D'EXTRÉMITÉ DE BALAI D'ESSUIE-GLACE**
ENDSTÜCK EINES SCHEIBENWISCHERBLATTS
END TIP FOR WIPER BLADE STRIP

(30) Priorité: 19.09.2016 FR 1658770
(43) Date de publication de la demande: 21.03.2018
(73) Titulaire: Valeo Systèmes d'Essuyage, 78322 Le Mesnil Saint Denis (FR)
(72) Inventeur: CAILLOT, Gérald, 78322 LE MESNILS SAINT DENIS (FR)
(74) Mandataire: Valeo Systèmes d'Essuyage

(56) Documents cités:
- WO-A1-2013/186498
- DE-A1-102012 100 777
- DE-A1-102013 215 196
- FR-A1- 3 013 288

## Description

### DOMAINE TECHNIQUE

La présente invention est relative au domaine du nettoyage d'un pare-brise de véhicule, en particulier automobile. Elle concerne un embout d'extrémité de balai d'essuie-glace, ainsi qu'un organe pour balai d'essuie-glace comprenant au moins un canal de distribution de liquide lave-glace et muni dudit embout. Elle a également pour objet un procédé de fabrication de l'embout d'extrémité.

### ETAT DE L'ART

Typiquement, un balai d'essuie-glace d'une vitre telle que le pare-brise d'un véhicule automobile comprend une lame d'essuyage, en général en caoutchouc, destinée à frotter contre la vitre du véhicule pour évacuer de l'eau en l'amenant en dehors du champ de vision du conducteur. Le balai comporte en outre une vertèbre longitudinale qui rigidifie la lame d'essuyage, de manière à favoriser l'application de cette lame sur le pare-brise, ainsi qu'une monture de support de la vertèbre et de la lame. Le balai comporte également un organe longitudinal de couverture comportant un déflecteur aérodynamique supérieur destiné à améliorer le plaquage du balai sur le pare-brise et donc la performance aérodynamique du système.

Le balai est rattaché à un bras tournant de l'essuie-glace par un ensemble constitué d'un connecteur mécanique et d'un adaptateur. Le connecteur est une pièce qui est fixée directement sur la structure du balai, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

La vertèbre de rigidification, la lame d'essuyage et la monture de support du balai sont des composants du balai qui sont d'orientation principale longitudinale. La vertèbre et la lame sont introduites en coulissement longitudinal dans des logements longitudinaux complémentaires de la monture.

Le blocage longitudinal de l'organe de couverture, ainsi que de la vertèbre et de la lame dans les logements de la monture, est réalisé par des embouts d'extrémité montés sur chaque extrémité du balai.

Chaque embout est réalisé de manière à être verrouillé sur l'extrémité associée de la vertèbre et de manière à former une butée longitudinale des extrémités associées de l'organe de couverture, de la monture et de la lame. De manière alternative, l'embout peut être collé sur l'extrémité du balai.

Il est également connu un deuxième type de balai d'essuie-glace comprenant deux vertèbres longitudinales, chacune logée respectivement dans une rainure latérale de la lame d'essuyage. Dans ce type d'architecture de balai, l'organe longitudinal de couverture du balai peut être fixé directement sur les vertèbres à l'aide de crochets longitudinaux latéraux recevant chacun une extrémité de la vertèbre.

Par ailleurs, il est connu de projeter du liquide lave-glace depuis des buses fixées sur une partie fixe d'un véhicule automobile telle que le capot.

Un tel dispositif présente l'inconvénient notable de faire appel à des buses qui sont nécessairement éloignées du pare-brise, ce qui rend difficile l'obtention d'un arrosage homogène du pare-brise.

De plus, le liquide projeté a tendance à être fortement rabattu vers le bas du pare-brise lorsque le véhicule roule à haute vitesse.

Pour remédier à cet inconvénient, il a été proposé d'intégrer le système de distribution de liquide lave-glace à un essuie-glace, et notamment à un balai d'essuie-glace, sous la forme d'une ou plusieurs rampes d'arrosage formé(s) par exemple dans l'organe longitudinal de couverture du balai. On a ainsi conçu des balais d'essuie-glace comportant un système pour la distribution de liquide lave-glace sur une vitre à essuyer d'un véhicule automobile, les balais comportant au moins une rampe longitudinale d'arrosage, sensiblement tubulaire, qui comporte un canal interne dans lequel circule le liquide lave-glace et des orifices d'arrosage de la vitre du véhicule, et dans lesquels la rampe est fixée longitudinalement sur l'essuie-glace et est reliée à un circuit d'alimentation en liquide lave-glace sous pression par une canalisation d'alimentation.

Les systèmes de distribution de liquide lave-glace de l'état de la technique ont pour inconvénient que le liquide n'est pas distribué sur toute la longueur du balai. En particulier, le liquide n'est pas distribué au niveau des embouts d'extrémité. L'efficacité du lavage en est affectée et la précision des capteurs recueillant des informations visuelles à travers le pare-brise peut ainsi être perturbée. WO-A-2013/186498 montre le préambule de la revendication 1.

La présente invention vise à remédier à ces inconvénients en proposant un embout d'extrémité de balai d'essuie-glace qui permet d'élargir la zone de distribution de liquide lave-glace.

### EXPOSE DE L'INVENTION

L'invention a ainsi pour objet un embout d'extrémité de balai d'essuie-glace, comprenant au moins un élément d'obturation d'un canal de distribution de liquide lave-glace d'un organe du balai.

Dans l'embout selon l'invention, ledit au moins un élément d'obturation comprend un canal, dit canal d'extrémité, destiné à être mis en communication fluidique avec ledit canal de distribution lors de l'obturation dudit canal de distribution, et au moins un orifice d'arrosage issu dudit canal d'extrémité.

Ainsi, avantageusement, la présence d'un canal d'extrémité dans l'élément d'obturation, ledit canal d'extrémité débouchant à l'extérieur de l'embout via le ou les orifices d'arrosage, permet de créer un prolongement de la distribution de liquide lave-glace au niveau de l'embout. Le prolongement de la distribution de liquide s'effectue de manière simple, par mise en communication du canal de distribution avec le canal d'extrémité, lors de l'obturation du canal de distribution.

L'embout étant d'orientation principale longitudinale, chaque élément d'obturation et chaque canal d'extrémité sont d'orientation longitudinale.

Ledit au moins un orifice d'arrosage se présente sous la forme de canal et est d'orientation sensiblement orthogonale à l'orientation longitudinale.

L'embout comprend de préférence deux éléments d'obturation.

L'embout comprend une première face définissant un logement destiné à recevoir l'extrémité de l'organe du balai, une deuxième face opposée à la première face selon l'orientation principale longitudinale de l'embout et fermée par une paroi d'extrémité, la première face et la deuxième face étant reliées entre elles par des parois latérales.

Chaque élément d'obturation peut s'étendre sensiblement le long d'une paroi latérale de l'embout et débouche au niveau de la première face de l'embout.

Ledit au moins un orifice d'arrosage débouche à l'extérieur dudit embout, au niveau d'une paroi latérale de l'embout.

Chaque canal d'extrémité peut être de section transversale courbe, de préférence circulaire.

L'embout peut comprendre au moins un logement de réception d'une vertèbre du balai et un logement de réception du talon d'une lame d'essuyage du balai.

La paroi latérale peut comprendre au moins un orifice, ledit orifice étant aménagé de façon à permettre la projection du liquide éjecté au niveau de l'orifice d'arrosage à l'extérieur de l'embout.

L'invention a également pour objet un organe pour balai d'essuie-glace, comprenant au moins un canal de distribution de liquide lave-glace. L'organe selon l'invention est muni d'au moins un embout d'extrémité décrit ci-dessus.

Chaque canal de distribution peut être obturé par un élément d'obturation.

Chaque canal d'extrémité peut être disposé au moins en partie à l'intérieur d'un canal de distribution.

L'organe peut comprendre, dans un voisinage dudit au moins un embout, au moins un orifice d'arrosage orienté en direction dudit au moins un embout.

L'organe peut comprendre deux canaux de distribution de liquide lave-glace, chaque canal s'étendant sensiblement le long d'une face latérale de l'organe.

L'organe peut être un organe de couverture du balai.

L'organe peut comprendre un déflecteur aérodynamique.

L'invention a également pour objet un balai d'essuie-glace, comprenant au moins un embout d'extrémité décrit ci-dessus.

L'invention a également pour objet un procédé de fabrication d'un embout d'extrémité décrit ci-dessus. Le procédé comprend la formation d'un canal d'extrémité dans ledit au moins un élément d'obturation et la formation d'au moins un orifice d'arrosage issu dudit canal d'extrémité et débouchant à l'extérieur dudit embout.

L'invention a également pour objet un procédé d'assemblage d'un embout d'extrémité décrit ci-dessus à un organe pour balai d'essuie-glace comprenant au moins un canal de distribution de liquide lave-glace. Le procédé comprend une étape d'obturation dudit au moins un canal de distribution de l'organe par un élément d'obturation de l'embout, de manière à mettre en communication fluidique ledit au moins un canal de distribution avec le canal d'extrémité dudit élément d'obturation.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue en perspective d'un balai d'essuie-glace relié à un bras porte-balai,
- la figure 2 est une vue en coupe transversale d'un balai d'essuie-glace munie de rampes d'arrosage, conformément à un premier mode de réalisation,
- la figure 3 est une vue en coupe transversale d'un balai d'essuie-glace munie de rampes d'arrosage, conformément à un deuxième mode de réalisation,
- la figure 4 est une vue en perspective d'un embout d'extrémité de balai d'essuie-glace, , conformément à un premier mode de réalisation,
- la figure 5 est une vue partielle en perspective d'un balai muni d'un système de distribution de liquide lave-glace de l'état de la technique, en configuration opérationnelle du balai,
- la figure 6 est une vue de dessous en coupe longitudinale d'un embout d'extrémité de balai d'essuie-glace selon l'invention,
- la figure 7 est une vue de l'embout d'extrémité de la figure 6 selon la coupe A-A,
- la figure 8 est une vue partielle en perspective de l'embout d'extrémité de la figure 6,
- la figure 9 est une vue partielle en perspective d'un balai muni d'un embout d'extrémité selon l'invention, en configuration opérationnelle du balai, et
- la figure 10 est une vue en perspective d'un embout d'extrémité de balai d'essuie-glace, conformément à un deuxième mode de réalisation,

### DESCRIPTION DETAILLEE

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à la direction longitudinale et représentant la largeur du balai d'essuie-glace. Pour les directions longitudinales, les dénominations extérieure ou intérieure s'apprécient par rapport au point de fixation du balai sur un bras porte-balai, la dénomination intérieure correspondant à la partie où le bras et un demi-balai s'étendent. Les directions référencées comme verticales désignent la direction perpendiculaire à la fois à la direction longitudinale et à la direction transversale. Dans un système d'essuyage dans lequel le balai d'essuie-glace est en position de travail, c'est-à-dire plaqué contre une surface vitrée à essuyer/nettoyer, les directions référencées comme inférieures désignent plus précisément les régions proches de la surface à essuyer selon la direction verticale, et les directions référencées comme supérieures désignent les régions qui s'éloignent de cette dernière selon cette même direction verticale. Ces directions et orientations s'appliquent également, bien sûr, aux différents composants constitutifs du balai d'essuie-glace.

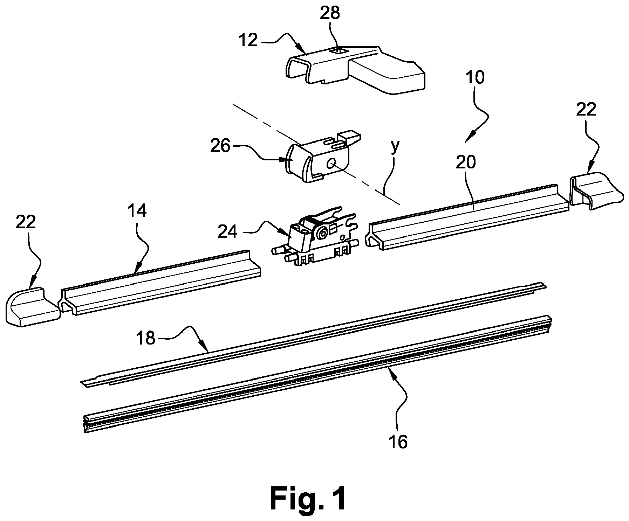

En référence aux figures 1 à 9, les éléments identiques ou fonctionnellement équivalents sont repérés par des chiffres de référence identiques.

Il est illustré à la figure 1 un essuie-glace, représenté en éclaté, en particulier d'un pare-brise de véhicule automobile, cet essuie-glace comprenant un balai longitudinal 10 d'essuie-glace et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un organe longitudinal de couverture 14, une lame longitudinale racleuse 16, en général en caoutchouc, et au moins une vertèbre longitudinale 18 qui confère une rigidification à la lame 16 de manière à favoriser l'application de cette lame 16 sur le pare-brise.

L'organe de couverture 14 du balai 10 comporte un déflecteur aérodynamique supérieur 20 destiné à améliorer le fonctionnement de l'essuie-glace, le but de ce déflecteur 20 étant d'améliorer le plaquage du balai 10 sur le pare-brise et donc la performance aérodynamique du système.

Le balai 10 comprend en outre des embouts d'accrochage ou d'extrémité 22, ces embouts étant destinés à solidariser la lame 16 et la vertèbre 18 sur l'organe de couverture 14, ces embouts 22 étant situés à chacune des extrémités longitudinales de l'organe de couverture 14.

L'organe de couverture 14 du balai est ici réalisé en deux parties indépendantes qui sont disposées sensiblement bout à bout et séparées l'une de l'autre par un connecteur 24 intermédiaire. Ce connecteur 24 est donc intercalé entre les deux parties de l'organe de couverture 14 et peut comprendre des moyens de raccordement fluidique de moyens d'alimentation en liquide lave glace du connecteur 24 à des conduites de l'organe 14.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

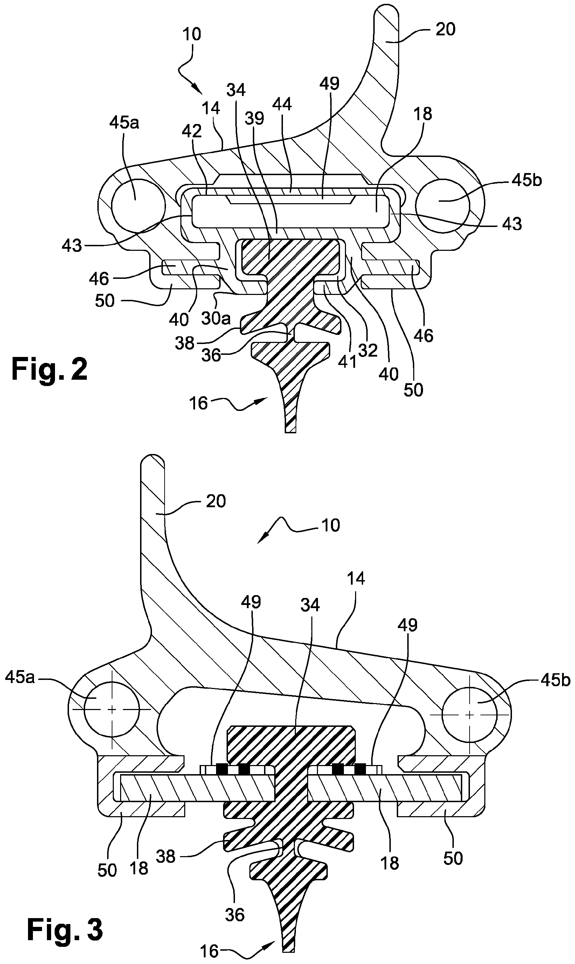

La figure 2 représente un premier mode de réalisation d'un balai d'essuie-glace 10, ce balai 10 comprenant, en plus des caractéristiques décrites ci-dessus en référence à la figure 1, un organe longitudinal 30a de support de la lame 16 et de la vertèbre 18.

L'organe de support 30a comprend deux nervures longitudinales latérales 46, par exemple sous la forme de deux lames. Ces nervures 46 sont sensiblement coplanaires, chaque nervure 46 s'étendant latéralement du côté opposé à l'autre nervure.

L'organe de couverture 14 peut comprendre au moins un canal longitudinal 45 de circulation de liquide lave-glace, raccordé à des moyens de distribution appropriés, par exemple au niveau du connecteur 24. Tel qu'illustré à la figure 2, l'organe de couverture 14 peut comprendre deux canaux 45a, 45b de section circulaire placés de chaque côté de l'organe de couverture 14, un canal 45a définissant une première rampe de distribution de liquide et l'autre canal 45b définissant une seconde rampe de distribution de liquide. Les rampes de distribution de liquide peuvent lors de l'utilisation du balai être utilisées simultanément ou alternativement. Lors d'un fonctionnement alternatif, on peut par exemple n'utiliser que la rampe qui est disposée en vis-à-vis du sens de déplacement du balai sur le pare-brise de manière à ce que le liquide projeté soit rapidement essuyé pour ne pas gêner la vision du conducteur.

L'organe de couverture 14 du balai comprend en outre à son extrémité inférieure des moyens d'accrochage sur l'organe de support 30a. Dans l'exemple représenté, l'organe de couverture 14 comprend deux crochets longitudinaux latéraux 50 qui sont destinés à coopérer avec les nervures 46 de l'organe de support 30a.

Les crochets 50 sont sensiblement coplanaires et définissent chacun une fente dans laquelle peuvent coulisser et sont montées les nervures 46 de l'organe de support 30a.

L'organe de support 30a du balai 10 comprend également un premier logement ou logement inférieur 32 de réception d'un talon longitudinal 34 de la lame 16. La lame 16 est par exemple du type sapin, bien connu de l'homme du métier. Son extrémité inférieure est reliée par une charnière 36 et un organe d'amortissement 38 au talon 34. De façon connue, en fonctionnement, lorsque la lame 16 pivote autour de la charnière 36, la lame 16 peut venir en butée sur l'organe 38.

Le logement 32 est configuré pour recevoir par coulissement longitudinal le talon 34 de la lame 16. Ce logement 32 est délimité par une paroi longitudinale de fond 39 et par deux parois latérales 40. Les extrémités supérieures des parois latérales 40 sont reliées à la paroi de fond 39 et leurs extrémités inférieures sont chacune reliées à un rebord longitudinal 41. Ces rebords 41 sont sensiblement coplanaires et s'étendent l'un vers l'autre. Ils délimitent entre eux une fente dans laquelle peut coulisser et est montée une partie amincie du talon 34.

L'organe de support 30a comprend un second logement ou logement supérieur 42 de réception de la vertèbre 18, qui s'étend ainsi au-dessus du talon 34 de la lame 16.

Le logement 42 est configuré pour recevoir par coulissement longitudinal la vertèbre 18. Ce logement 42 est délimité par la paroi de fond 39 précitée, par deux parois latérales 43, et par une paroi supérieure 44. Les extrémités inférieures des parois latérales 43 sont reliées à la paroi de fond 39 et leurs extrémités supérieures sont chacune reliées à la paroi supérieure 44.

La vertèbre 18 a une forme cintrée au repos et comprend une face supérieure incurvée convexe et une face inférieure incurvée concave.

De manière optionnelle, un élément chauffant 49 tel qu'un film chauffant réalisé en matériau résistif peut être fixé sur la face supérieure de la vertèbre 18.

Dans un deuxième mode de réalisation illustré à la figure 3, sur lequel les éléments identiques à ceux de la figure 2 portent les mêmes références, le balai 10 peut comprendre deux vertèbres 18. Ce type de balai est dépourvu d'organe de support. Chaque vertèbre 18 est insérée longitudinalement dans un crochet 50 de l'organe de couverture 14 et dans le talon 34 de lame 16. L'invention peut notamment s'appliquer à ces deux modes de réalisation.

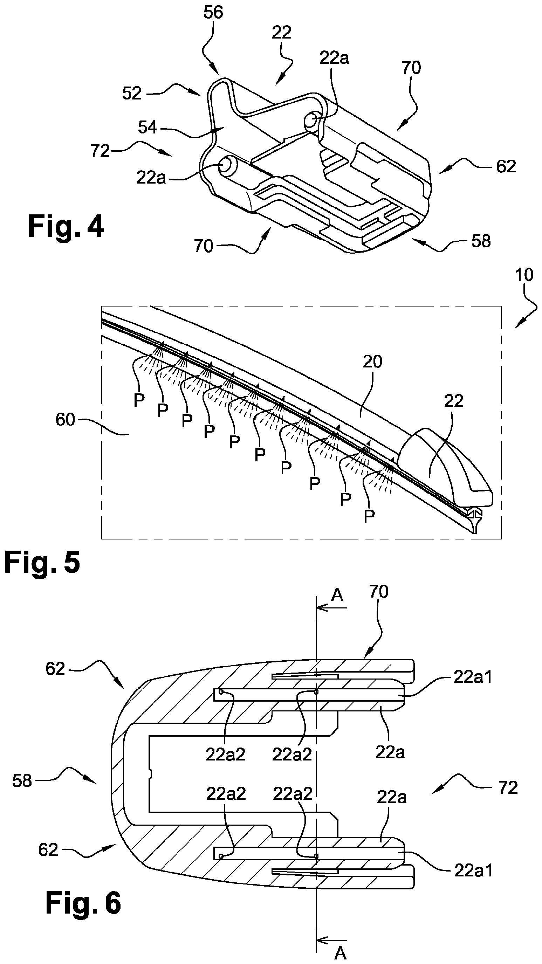

Le balai 10 est muni à chacune de ses extrémités longitudinales d'un embout d'extrémité 22. Chaque embout d'extrémité 22 comprend au moins un élément d'obturation 22a, typiquement deux, sous la forme de bouchons s'étendant longitudinalement et qui sont destinés à obturer les extrémités longitudinales des canaux 45a, 45b (figure 4).

Chaque embout d'extrémité 22 chevauche en particulier l'extrémité de la ou des vertèbres 18 et/ou de l'organe de couverture 14 et/ou de la lame 16 et/ou de l'organe de support 30a, constitutifs du balai d'essuyage. Un tel embout 22 maintient ensemble au moins une partie de ces éléments.

Par la suite, il sera fait référence à une partie avant de l'embout et à une partie arrière de l'embout. La partie avant de l'embout d'extrémité 22 correspond à la région de l'embout dans laquelle l'extrémité de la ou des vertèbres 18 et/ou de l'organe de couverture 14 et/ou de la lame 16 et/ou de l'organe de support 30a, constitutifs du balai d'essuyage sont introduits ; la partie arrière de l'embout correspond à la partie de l'embout opposée à cette partie avant selon l'orientation principale longitudinale de l'embout 2.

L'embout d'extrémité 22 représenté aux figures 4 et 6 à 8 est destiné à être monté sur le balai représenté à la figure 3, c'est-à-dire le balai comprenant deux vertèbres et dépourvu d'organe de support.

L'embout d'extrémité 22 comprend une paroi supérieure 52 définissant en partie avant un volume ouvert 54 dans lequel se loge au moins l'organe de couverture 14 du balai d'essuyage. La forme de la paroi 52 est ainsi complémentaire de la forme extérieure de l'organe de couverture 14. C'est pourquoi l'embout comprend une aile déflectrice 56 qui coiffe l'aube formée sur l'organe de couverture 14 du balai d'essuyage selon l'invention.

La partie arrière de l'embout d'extrémité 22 est fermée par une paroi d'extrémité 58 qui joint les côtés latéraux 70 de l'embout au moyen d'arrondis 62. La paroi d'extrémité 58 est opposée à la face 72 recevant les éléments constitutifs du balai, c'est-à-dire l'extrémité de la ou des vertèbres et/ou de l'organe de couverture 14 et/ou de la lame 16. De préférence, chaque côté latéral 70 est constitué d'une paroi pleine.

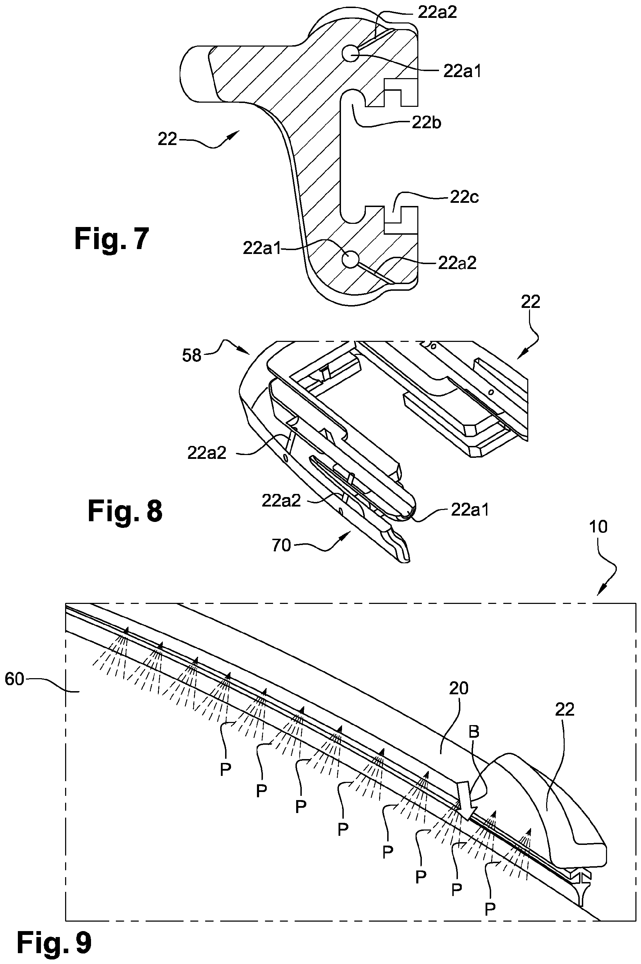

Comme visible à la figure 7, en partie inférieure, l'embout 22 comprend avantageusement un logement 22b de réception du talon 34 de la lame d'essuyage 16 et un logement 22c de réception des vertèbres 18.

Selon le type de balai, c'est-à-dire le balai représenté à la figure 2, comprenant une seule vertèbre retenue dans un organe de support, ou celui représenté à la figure 3, comprenant deux vertèbres directement retenues par la lame 16, la partie inférieure de l'embout 22 sera adaptée.

Tel qu'illustré à la figure 5, les projections de liquide P sont issues d'orifices formés dans le déflecteur 20 et éventuellement dans le connecteur et sont dirigés vers une vitre 60 telle qu'un pare-brise. Dans ce dispositif d'arrosage de l'état de la technique, le liquide n'est pas distribué au niveau des embouts d'extrémité 22. L'efficacité du lavage en est affectée et la précision des capteurs détectant des informations à travers le pare-brise peut ainsi être perturbée. Parmi de tels capteurs, on peut citer les capteurs de pluie, les capteurs d'activation et de fermeture des systèmes de sécurité, ou encore les capteurs de détection de brouillard ou de pollution du pare-brise. Si le pare-brise n'est pas correctement nettoyé, l'information fournie par ces capteurs peut-être faussée.

Pour y remédier, et conformément à l'invention, chaque bouchon 22a est muni d'un canal 22a1 longitudinal de circulation de liquide, dit canal d'extrémité. Des orifices d'arrosage 22a2, se présentant sous la forme de canaux, notamment plus fins que le canal d'extrémité 22a1, débouchent dans chaque canal d'extrémité 22a1 et relient le canal d'extrémité 22a1 à l'extérieur de l'embout 22 (figures 6 à 8).

Chaque canal d'extrémité 22a1 est de section transversale courbe, de préférence circulaire.

De préférence, et comme illustré à la figure 8, chaque orifice d'arrosage 22a2 débouche au niveau d'un côté latéral 70 de l'embout.

De manière complémentaire, un orifice d'arrosage 22a2 peut également déboucher au niveau de la paroi d'extrémité 58 de l'embout située à l'opposée de la face 72 recevant les éléments constitutifs du balai, c'est-à-dire l'extrémité de la ou des vertèbres et/ou de l'organe de couverture 14 et/ou de la lame 16.

Ainsi, les bouchons 22a continuent à exercer leur fonction d'obturation des canaux 45a, 45b du déflecteur 20 du balai 10, mais grâce à la présence des canaux d'extrémité 22a1, les canaux 45a, 45b sont prolongés à l'intérieur de l'embout 22. Le liquide issu des canaux 45a, 45b du déflecteur 20 peut ainsi circuler dans les canaux d'extrémité 22a1 et assurer une distribution de liquide au niveau des embouts d'extrémités 22 via les orifices d'arrosage 22a2. On réalise ainsi une distribution de liquide sur toute la longueur du balai 10.

L'embout 22 peut comprendre deux bouchons 22a, chaque bouchon 22a s'étendant sensiblement parallèlement à une face latérale 70 de l'embout 22. Chaque canal 22a1 formé dans le bouchon 22a s'étend alors longitudinalement selon l'orientation principale longitudinale de l'embout 22. Chaque canal 22a1 débouche sur une extrémité ouverte du bouchon 22a, du côté du canal de distribution de liquide 45a, 45b de l'organe à obturer, c'est à dire au niveau de la face 72 de l'embout recevant les éléments constitutifs du balai, c'est-à-dire l'extrémité de la ou des vertèbres et/ou de l'organe de couverture 14 et/ou de la lame 16.

Les orifices d'arrosage 22a2 peuvent être créés par injection ou par perçage, par exemple par perçage laser, mécanique ou par déformation thermique réalisés dans la ou les faces latérales 70 de l'embout 22.Lorsque l'embout 22 est monté sur le balai, les bouchons 22a sont insérés à l'intérieur des canaux 45a, 45b de l'organe de couverture 14 du balai. Les canaux d'extrémité 22a1 de l'embout 22 sont ainsi disposés longitudinalement au balai 10, dans le prolongement des canaux 45a, 45b.

Les orifices d'arrosage 22a2 sont disposés sensiblement orthogonalement aux canaux 22a1 (figures 7 et 8).

La figure 9 illustre le balai 10, lors du fonctionnement du dispositif d'arrosage. Les projections de liquide P sont réalisées sur le pare-brise 60 tout le long du balai 10, y compris au niveau de l'embout d'extrémité 22, grâce à l'embout 22 selon l'invention.

Pour renforcer l'arrosage au niveau d'un embout d'extrémité 22, le déflecteur 20 peut comprendre dans un voisinage de l'embout 22 au moins un orifice d'arrosage orienté selon une direction B, en direction de l'embout 22.

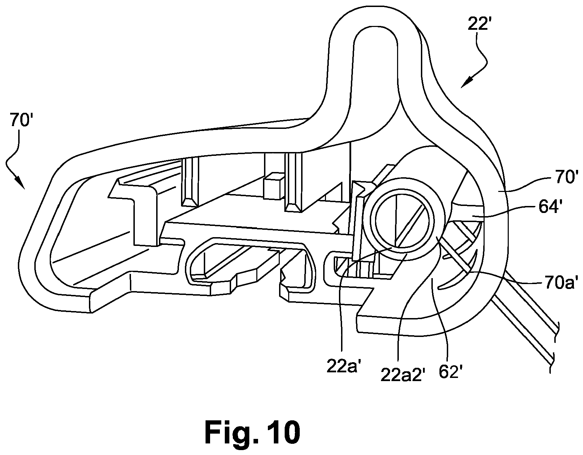

La figure 10 présente un second mode de réalisation d'un embout d'extrémité 22' dans lequel l'élément d'obturation 22a' est indépendant de la paroi latérale 70' de l'embout 22, c'est-à-dire situé à distance de la paroi latérale 70' de l'embout 22. Tout comme dans le premier mode de réalisation, l'élément d'obturation 22a' s'étend sensiblement longitudinalement selon l'orientation principale longitudinale de l'embout 22, parallèlement à la paroi latérale 70' de l'embout 22', L'élément d'obturation 22a' est séparé de la paroi latérale 70' par un évidement 62'.

Dans ce mode de réalisation, l'élément d'obturation 22a' est lié à la paroi latérale 70' par une nervure 64'.

Par exemple, la nervure 64' s'étend longitudinalement selon l'orientation principale longitudinale de l'embout 22 tout en étant sensiblement perpendiculaire à la paroi latérale 70',

L'élément d'obturation 22a' comprend au moins un orifice d'arrosage 22a2' par lequel s'écoule le liquide lave-glace ; dans le mode de réalisation de la figure 10, deux orifices d'arrosage 22a2' sont présents.

Chaque orifice d'arrosage 22a2' est disposé en regard d'un orifice 70a' réalisé dans la paroi latérale 70' de l'embout 22', L'orifice 70a' est aménagé de façon à permettre la projection du liquide éjecté au niveau de l'orifice d'arrosage 22a2'sur la vitre, à l'extérieur de l'embout.

## Revendications

1. Embout d'extrémité (22, 22') de balai d'essuie-glace (10), comprenant au moins un élément d'obturation (22a, 22a') d'un canal de distribution (45a,45b) de liquide lave-glace d'un organe (14) du balai (10), ledit embout comprenant une première face définissant un logement (54) destiné à recevoir l'extrémité de l'organe (14) du balai (10), une deuxième face opposée à la première face selon l'orientation principale longitudinale de l'embout et fermée par une paroi d'extrémité (58), la première face et la deuxième face étant reliées entre elles par des parois latérales (70, 70'), ledit au moins un élément d'obturation (22a, 22a') comprenant un canal (22a1), dit canal d'extrémité, destiné à être mis en communication fluidique avec ledit canal de distribution (45a,45b) lors de l'obturation dudit canal de distribution (45a,45b), et au moins un orifice d'arrosage (22a2, 22a2') issu dudit canal d'extrémité (22a1), ledit au moins un orifice d'arrosage (22a2) débouchant à l'extérieur dudit embout (22) au niveau d'une paroi latérale (70, 70') de l'embout, l'embout (22, 22') étant d'orientation principale longitudinale, chaque élément d'obturation (22a, 22a') et chaque canal d'extrémité (22a1) étant d'orientation longitudinale **caractérisé en ce que** ledit au moins un orifice d'arrosage (22a2) se présente sous la forme d'un canal et est d'orientation sensiblement orthogonale à l'orientation longitudinale.

2. Embout (22, 22') selon la revendication précédente, **caractérisé en ce qu'**il comprend deux éléments d'obturation (22a, 22a').

3. Embout (22, 22') selon l'une des revendications 1 ou 2, **caractérisé en ce que** chaque élément d'obturation (22a) s'étend sensiblement le long d'une paroi latérale (70, 70') de l'embout (22, 22') et débouche au niveau de la première face de l'embout.

4. Embout (22, 22') l'une des revendications précédentes, **caractérisé en ce que** la paroi latérale (70') comprend au moins un orifice (70a'), ledit orifice étant aménagé de façon à permettre la projection du liquide éjecté au niveau de l'orifice d'arrosage (22a2') à l'extérieur de l'embout.

5. Embout (22, 22') selon l'une des revendications précédentes, **caractérisé en ce qu'**il comprend au moins un logement de réception (22c) d'une vertèbre (18) du balai (10) et un logement de réception (22b) du talon (34) d'une lame d'essuyage (16) du balai (10).

6. Organe (14) pour balai d'essuie-glace, comprenant au moins un canal de distribution (45a, 45b) de liquide lave-glace, **caractérisé en ce qu'**il est muni d'au moins un embout d'extrémité (22, 22') selon l'une des revendications 1 à 5.

7. Organe (14) selon la revendication précédente, **caractérisé en ce que** chaque canal de distribution (45a, 45b) est obturé par un élément d'obturation (22a), chaque canal d'extrémité (22a1) étant de préférence disposé au moins en partie à l'intérieur d'un canal de distribution (45a, 45b).

8. Organe (14) selon l'une des revendications 6 ou 7, **caractérisé en ce qu'**il comprend, dans un voisinage dudit au moins un embout (22, 22'), au moins un orifice d'arrosage orienté en direction dudit au moins un embout (22, 22').

9. Organe (14) selon l'une des revendications 6 à 8, **caractérisé en ce qu'**il comprend deux canaux de distribution de liquide lave-glace (45a, 45b), chaque canal (45a,45b) s'étendant sensiblement le long d'une face latérale de l'organe (14).

10. Organe (14) selon l'une des revendications 6 à 9, **caractérisé en ce que** l'organe (14) est un organe de couverture du balai (10), ledit organe comprenant de préférence un déflecteur aérodynamique (20).

11. Balai d'essuie-glace (10), **caractérisé en ce qu'**il comprend au moins un embout d'extrémité (22, 22') selon l'une des revendications 1 à 5.

12. Procédé de fabrication d'un embout d'extrémité (22, 22') selon l'une des revendications 1 à 5, **caractérisé en ce qu'**il comprend la formation d'un canal d'extrémité (22a1) dans ledit au moins un élément d'obturation (22a) et la formation d'au moins un orifice d'arrosage (22a2, 22a2') issu dudit canal d'extrémité (22a1) et débouchant à l'extérieur dudit embout (22, 22').

13. Procédé d'assemblage d'un embout d'extrémité (22, 22') selon l'une des revendications 1 à 5 à un organe (14) pour balai d'essuie-glace (10) comprenant au moins un canal de distribution (45a,45b) de liquide lave-glace, **caractérisé en ce qu'**il comprend une étape d'obturation dudit au moins un canal de distribution (45a,45b) de l'organe (14) par un élément d'obturation (22a) de l'embout (22, 22'), de manière à mettre en communication fluidique ledit au moins un canal de distribution (45a,45b) avec le canal d'extrémité (22a1) dudit élément d'obturation (22a).

## Patentansprüche

1. Endabdeckung (22, 22') eines Scheibenwischers (10), aufweisend mindestens ein Element (22a, 22a') zum Verschließen eines Kanals (45a, 45b) zum Verteilen von Scheibenwaschflüssigkeit eines Organs (14) des Wischers (10), wobei die Abdeckung eine erste Fläche, welche eine Aufnahme (54) definiert, welche dafür vorgesehen ist, das Ende des Organs (14) des Wischers (10) aufzunehmen, eine zweite Fläche aufweist, welche gemäß der longitudinalen Hauptausrichtung der Abdeckung der ersten Fläche gegenüber liegt und durch eine Stirnwand (58) geschlossen ist, wobei die erste Fläche und die zweite Fläche durch Seitenwände (70, 70') miteinander verbunden sind, wobei das mindestens eine Verschlusselement (22a, 22a') einen Kanal (22a1), so genannter Endkanal, welcher dafür vorgesehen ist, beim Verschließen des Verteilungskanals (45a, 45b) mit dem Verteilungskanal (45a, 45b) in fluide Verbindung gebracht zu werden, und mindestens eine Sprinkleröffnung (22a2, 22a2') aufweist, welche aus dem Endkanal (22a1) stammt, wobei die mindestens eine Sprinkleröffnung (22a2) in den Außenbereich der Abdeckung (22) auf der Höhe einer Seitenwand (70, 70') der Abdeckung mündet, wobei die Abdeckung (22, 22') eine longitudinale Hauptausrichtung aufweist, wobei jedes Verschlusselement (22a, 22a') und jeder Endkanal (22a1) eine Hauptausrichtung aufweisen, **dadurch gekennzeichnet, dass** die mindestens eine Sprinkleröffnung (22a2) sich in der Form eines Kanals darstellt und eine zur longitudinalen Ausrichtung im Wesentlichen senkrechte Ausrichtung aufweist.

2. Abdeckung (22, 22') nach dem vorhergehenden Anspruch, **dadurch gekennzeichnet, dass** sie zwei Verschlusselemente (22a, 22a') aufweist.

3. Abdeckung (22, 22') nach einem der Ansprüche 1 oder 2, **dadurch gekennzeichnet, dass** sich jedes Verschlusselement (22a) im Wesentlichen entlang einer Seitenwand (70, 70') des Endstücks (22, 22') erstreckt und auf der Höhe der ersten Fläche der Abdeckung mündet.

4. Abdeckung (22, 22') nach einem der vorhergehenden Ansprüche, **dadurch gekennzeichnet, dass** die Seitenwand (70') mindestens eine Öffnung (70a') aufweist, wobei die Öffnung eingerichtet ist, um das Ausschleudern der ausgestoßenen Flüssigkeit auf der Höhe der Sprinkleröffnung (22a2') in den Außenbereich der Abdeckung zu ermöglichen.

5. Abdeckung (22, 22') nach einem der vorhergehenden Ansprüche, **dadurch gekennzeichnet, dass** sie mindestens eine Aufnahme (22c) zum Aufnehmen einer Leiste (18) des Wischers (10) und eine Aufnahme (22b) zum Aufnehmen des Ansatzes (34) eines Wischerblatts (16) des Wischers (10) aufweist.

6. Organ (14) für einen Scheibenwischer, aufweisend mindestens einen Kanal (45a, 45b) zum Verteilen von Scheibenwaschflüssigkeit, **dadurch gekennzeichnet, dass** es mit mindestens einer Endabdeckung (22, 22') nach einem der Ansprüche 1 bis 5 versehen ist.

7. Organ (14) nach dem vorhergehenden Anspruch, **dadurch gekennzeichnet, dass** jeder Verteilungskanal (45a, 45b) durch ein Verschlusselement (22a) verschlossen ist, wobei jeder Endkanal (22a1) vorzugsweise zumindest zum Teil im Inneren eines Verteilungskanals (45a, 45b) angeordnet ist.

8. Organ (14) nach einem der Ansprüche 6 oder 7, **dadurch gekennzeichnet, dass** es in einer Nähe der mindestens einen Abdeckung (22, 22') mindestens eine Sprinkleröffnung aufweist, welche in Richtung der mindestens einen Abdeckung (22, 22') ausgerichtet ist.

9. Organ (14) nach einem der Ansprüche 6 bis 8, **dadurch gekennzeichnet, dass** es zwei Kanäle (45a, 45b) zum Verteilen von Scheibenwaschflüssigkeit aufweist, wobei sich jeder Kanal (45a, 45b) im Wesentlichen entlang einer Seitenfläche des Organs (14) erstreckt.

10. Organ (14) nach einem der Ansprüche 6 bis 9, **dadurch gekennzeichnet, dass** das Organ (14) ein Organ zum Abdecken des Wischers (10) ist, wobei das Organ vorzugsweise einen aerodynamischen Deflektor (20) aufweist.

11. Scheibenwischer (10), **dadurch gekennzeichnet, dass** er mindestens eine Endabdeckung (22, 22') nach einem der Ansprüche 1 bis 5 aufweist.

12. Verfahren zur Herstellung einer Endabdeckung (22, 22') nach einem der Ansprüche 1 bis 5, **dadurch gekennzeichnet, dass** es das Ausbilden eines Endkanals (22a1) in dem mindestens einen Verschlusselement (22a) und das Ausbilden mindestens einer Sprinkleröffnung (22a2, 22a2') aufweist, welche aus dem Endkanal (22a1) stammt und in den Außenbereich der Abdeckung (22, 22') mündet.

13. Verfahren zur Montage einer Endabdeckung (22, 22') nach einem der Ansprüche 1 bis 5 an einem Organ (14) für einen Scheibenwischer (10), aufweisend mindestens einen Kanal (45a, 45b) zum Verteilen von Scheibenwaschflüssigkeit, **dadurch gekennzeichnet, dass** es einen Schritt des Verschließens des mindestens einen Verteilungskanals (45a, 45b) des Organs (14) durch ein Verschlusselement (22a) der Abdeckung (22, 22') aufweist, um den mindestens einen Verteilungskanal (45a, 45b) mit dem Endkanal (22a1) des Verschlusselements (22a) in fluide Verbindung zu bringen.

## Claims

1. A wiper blade (10) end cap (22, 22'), comprising at least one sealing element (22a, 22a') for sealing a channel (45a, 45b) for delivering windscreen washer fluid of a member (14) of the blade (10), said end cap comprising a first face defining a housing (54) intended to receive the end of the blade (10) member (14), a second face opposite the first face according to the longitudinal main orientation of the end cap and closed by an end wall (58), the first face and the second face being connected to each other by lateral walls (70, 70'), said at least one sealing element (22a, 22a') comprising a channel (22a1), referred to as the end channel, intended to be brought into fluid communication with said delivery channel (45a, 45b) when said delivery channel (45a, 45b) is sealed, and at least one spray opening (22a2, 22a2') originating at said end channel (22a1), said at least one spray opening (22a2) emerging on the outside of said end cap (22) at a lateral wall (70,70') of the end cap, the end cap (22, 22') having a longitudinal main orientation, each sealing element (22a, 22a') and each end channel (22a1) having a longitudinal orientation, **characterised in that** said at least one spray opening (22a2) is in the form of a channel and has an orientation that is substantially orthogonal to the longitudinal orientation.

2. The end cap (22, 22') according to the preceding claim, **characterised in that** it comprises two sealing elements (22a, 22a').

3. The end cap (22, 22') according to one of claims 1 or 2, **characterised in that** each sealing element (22a) extends substantially along a lateral wall (70, 70') of the end cap (22, 22') and emerges at the first face of the end cap.

4. The end cap (22, 22') according to one of the preceding claims, **characterised in that** the lateral wall (70') comprises at least one opening (70a'), said opening being arranged so as to allow the fluid ejected at the spray opening (22a2') to be sprayed out of the end cap.

5. The end cap (22, 22') according to one of the preceding claims, **characterised in that** it comprises at least a housing (22c) for receiving a vertebra (18) of the blade (10) and a housing (22b) for receiving the heel (34) of a wiper strip (16) of the blade (10).

6. The member (14) for a wiper blade, comprising at least one channel (45a, 45b) for delivering windscreen washer fluid, **characterised in that** it is provided with at least one end cap (22, 22') according to one of claims 1 to 5.

7. The member (14) according to the preceding claim, **characterised in that** each delivery channel (45a, 45b) is sealed by means of a sealing element (22a), each end channel (22a1) preferably being arranged at least partially inside a delivery channel (45a, 45b).

8. The member (14) according to one of claims 6 to 7, **characterised in that** it comprises, in the vicinity of said at least one end cap (22, 22'), at least one spray opening oriented towards said at least one end cap (22, 22').

9. The member (14) according to one of claims 6 to 8, **characterised in that** it comprises two channels (45a, 45b) for delivering windscreen washer fluid, each channel (45a, 45b) extending substantially along a lateral face of the member (14).

10. The member (14) according to one of claims 6 to 9, **characterised in that** the member (14) is a cover member of the blade (10), said member preferably comprising an aerodynamic deflector (20).

11. A wiper blade (10), **characterised in that** it comprises at least one end cap (22, 22') according to one of claims 1 to 5.

12. A method for manufacturing an end cap (22, 22') according to one of claims 1 to 5, **characterised in that** it comprises the formation of an end channel (22a1) in said at least one sealing element (22a) and the formation of at least one spray opening (22a2, 22a2') originating at said end channel (22a1) and emerging on the outside of said end cap (22, 22').

13. The method for assembling an end cap (22, 22') according to one of claims 1 to 5 to a member (14) for a wiper blade (10) comprising at least one channel (45a, 45b) for delivering windscreen washer fluid, **characterised in that** it comprises a step of sealing said at least one delivery channel (45a, 45b) of the member (14) with a sealing element (22a) of the end cap (22, 22'), in such a way as to bring said at least one delivery channel (45a, 45b) into fluid communication with the end channel (22a1) of said sealing element (22a).
